# EUROPEAN PATENT APPLICATION

(11) **EP 2 192 761 A1**
(43) Date of publication of application: **02.06.2010**
(21) Application number: 08832358.9
(22) Date of filing: 09.09.2008
(51) Int. Cl.: H04N 5/04, H04N 5/14

(54) **SYNCHRONIZATION SIGNAL GENERATION DEVICE**

(30) Priority: 19.09.2007 JP 2007242708
(71) Applicant: Panasonic Corporation, Kadoma-shi Osaka 571-8501 (JP)
(72) Inventor: KITANO Katsuyuki, Osaka-shi, Osaka 540-6207 (JP); KOMURA Tadanori, Osaka-shi, Osaka 540-6207 (JP)
(74) Representative: Grünecker, Kinkeldey, Stockmair & Schwanhäusser Anwaltssozietät
(86) International application number: PCT/JP2008/002492
(87) International publication number: WO 2009/037812

(57) **Abstract**

A sync separation section separates an external horizontal synchronizing signal from an input video signal. A line locked PLL receives the external horizontal synchronizing signal as a reference signal and generates an internal horizontal synchronizing signal. A determination section computes a time integral value of a phase difference between the external horizontal synchronizing signal and the internal horizontal synchronizing signal and determines whether or not the time integral value exceeds a threshold value. A control section performs the control of switching an output frequency of the line locked PLL based on a determination result from the determination section.

## Description

### Technical Field

The present invention relates to a synchronizing-signal generating device, and specifically to the technique of generating a horizontal synchronizing signal within the device based on a video signal which is externally input.

### Background Art

Standards for video signals include National Television System Committee (NTSC), Phase Alternation Line (PAL), and the like. A video signal conforming to a standard (i.e., a standard signal) can correctly perform display control according to a format defined by the standard, whereas a video signal nonconforming to the standard (i.e., a nonstandard signal) is indefinite in display format, and thus cannot display an effective video. Therefore, when a video signal processor determines an input external video signal to be a nonstandard signal, the video signal processor generally causes, for example, a blackout of a display for controlling such that the nonstandard signal is not displayed.

Whether or not the external video signal is standard can be determined based on a horizontal synchronizing signal. The horizontal synchronizing signal is included in the video signal, and can be separated and extracted from the video signal. However, since the horizontal synchronizing signal in the video signal (i.e., an external horizontal synchronizing signal) includes a large amount of jitter, a horizontal synchronizing signal with less jitter (i.e., an internal horizontal synchronizing signal) is generally regenerated by, for example, a line locked Phase Locked Loop (PLL). Conventionally, a frequency of an internal horizontal synchronizing signal generated based on an input video signal is measured, and whether the input video signal is a standard signal or a nonstandard signal is determined based on an integral average of an error between the measured frequency and the normal frequency (see, for example, Patent Document 1).
[Patent Document 1] Japanese Unexamined Patent Publication No. 2006-311022

### Disclosure of Invention

### Problems to be solved by the invention

When an external video signal includes a large amount of jitter, an internal horizontal synchronizing signal cannot be generated correctly, and thus the external video signal may be determined to be a nonstandard signal. Especially, an analog video signal recorded on, for example, a video tape may not be played back under the same condition as that at the time of recording due to deterioration over time or a difference between a recorder and a player of the tape, and thus such an analog video signal is more likely to be determined to be a nonstandard signal. As a result, although a video signal which conforms to a standard and can be played back is recorded, the video signal processor may determine the video signal to be a nonstandard signal, which may result in a situation in which the video signal is not displayed at all.

In view of the problems mentioned above, an object of the present invention is to generate an internal horizontal synchronizing signal so that an input video signal which may have a somewhat low quality can be determined to be a standard signal.

### Means for solving the problems

To achieve the object mentioned above, the following approach is taken.
That is, a device for generating an internal horizontal synchronizing signal based on a video signal which is externally input includes: a sync separation section for separating an external horizontal synchronizing signal from the video signal; a line locked PLL for receiving the external horizontal synchronizing signal as a reference signal and generating the internal horizontal synchronizing signal; a determination section for computing a time integral value of a phase difference between the external horizontal synchronizing signal and the internal horizontal synchronizing signal and determining whether or not the time integral value exceeds a threshold value; and a control section for performing the control of switching an output frequency of the line locked PLL based on a determination result from the determination section. Alternatively, a device for generating an internal horizontal synchronizing signal based on a video signal which is externally input includes: a sync separation section for separating an external horizontal synchronizing signal from the video signal; a line locked PLL for receiving the external horizontal synchronizing signal as a reference signal and generating the internal horizontal synchronizing signal; a determination section for computing a time integral value of a difference between a frequency of the internal horizontal synchronizing signal and a normal frequency and determining whether or not the time integral value exceeds a threshold value; and a control section for performing the control of switching an output frequency of the line locked PLL based on a determination result from the determination section.

Therefore, when an input video signal has a low quality, and a phase difference between an external horizontal synchronizing signal and an internal horizontal synchronizing signal is relatively large, or a frequency of the external horizontal synchronizing signal is steadily shifted from a normal frequency, an output frequency of a line locked PLL is switched, which enables the internal horizontal synchronizing signal to be locked to a desired frequency. In this way, the video signal having a low quality can be determined to be a standard signal.

### Effects of the invention

As mentioned above, according to the present invention, it is possible to generate an internal horizontal synchronizing signal so that an input video signal which may have a somewhat low quality can be determined to be a standard signal. In this way, the video signal having a low quality can be determined to be a standard signal and can be displayed.

### Brief Description of Drawings

[FIG. 1] FIG. 1 is a view showing a configuration of a synchronizing-signal generating device according to Embodiment 1 of the present invention.
[FIG. 2] FIG. 2 is a view showing a configuration of a synchronizing-signal generating device according to Embodiment 2 of the present invention.

### Description of Reference Numerals

- 10: Sync Separation Section
- 20: Line Locked PLL
- 30: Determination Section
- 31: Positive Value Conversion Section
- 32: Cumulative adder
- 33: Comparator
- 34: Comparator (Second Comparator)
- 35: Frequency Measuring Section
- 36: Subtracter
- 40: Control Section
- 50: Filter

### Best Mode for Carrying Out the Invention

Hereinafter, best-mode embodiments of the present invention will be described with reference to the drawings.

### (Embodiment 1)

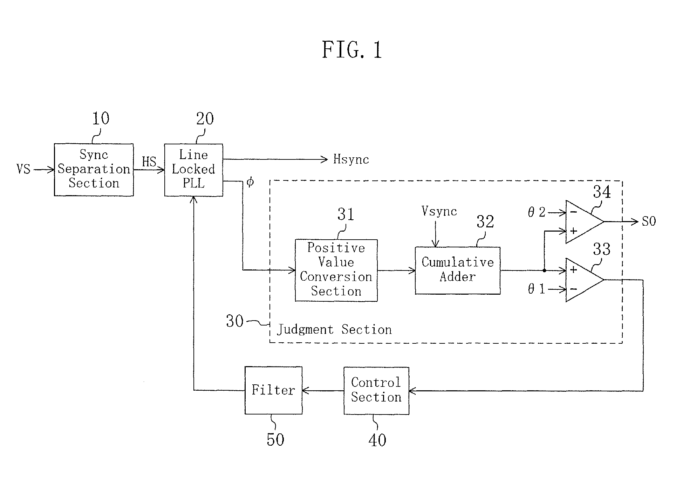

FIG. 1 shows a configuration of a synchronizing-signal generating device according to Embodiment 1. A sync separation section 10 separates an external horizontal synchronizing signal HS from a video signal VS such as a composite signal or a component signal input to the device. The video signal VS is a signal which is supplied from a home video tape player, or the like, and has a low quality. A line locked PLL 20 receives the external horizontal synchronizing signal HS as a reference signal and generates an internal horizontal synchronizing signal Hsync with less jitter. Moreover, the line locked PLL 20 outputs a phase difference φ between the external horizontal synchronizing signal HS and the internal horizontal synchronizing signal Hsync. It is to be noted that the line locked PLL 20 may be in a digital format or in an analog format.

A determination section 30 computes a time integral value of the phase difference φ between the external horizontal synchronizing signal HS and the internal horizontal synchronizing signal Hsync and determines whether or not the time integral value exceeds a threshold value θ1. Specifically, a positive value conversion section 31 outputs an absolute value or a squared value of the phase difference φ. The phase difference φ may be a negative value according to an advance/delay of phases of the external horizontal synchronizing signal HS and the internal horizontal synchronizing signal Hsync, and here, to obtain an amount of a phase shift, the phase difference φ is converted to a positive value by the positive value conversion section 31. Here, the positive value conversion section 31 may perform a coring process on its input or output signal to ignore a slight phase difference φ. That is, the positive value conversion section 31 may deem the slight phase difference φ to include no phase difference and output zero. Alternatively, when the absolute value or the squared value of the phase difference φ is slight, the positive value conversion section 31 may output zero.

A cumulative adder 32 performs cumulative addition of an output of the positive value conversion section 31. To the cumulative adder 32, a vertical synchronizing signal Vsync is given. Every time the cumulative adder 32 receives the pulse of the vertical synchronizing signal Vsync, the cumulative adder 32 resets a result of the addition. That is, concerning the phase difference φ between the external horizontal synchronizing signal HS and the internal horizontal synchronizing signal Hsync, the cumulative adder 32 computes a time integral value of each one field. Instead of the vertical synchronizing signal Vsync, a timer signal for notifying that a certain time period elapsed may be given.

A comparator 33 compares an output of the cumulative adder 32 with the threshold value θ1. When the output of the cumulative adder 32 is smaller than the threshold value θ1, the comparator 33 outputs, for example, "L". When the output of the cumulative adder 32 is larger than the threshold value θ1, the comparator 33 outputs, for example, "H". The threshold value θ1 is a reference value for determining whether a video signal VS is a standard signal or a nonstandard signal in a conventional nonstandard signal determination circuit. That is, the comparator 33 outputs the same result as a conventional result regarding the determination of whether the video signal VS is a standard signal or a nonstandard signal.

A comparator 34 compares the output of the cumulative adder 32 with a threshold value θ2 and outputs a signal S0. When the output of the cumulative adder 32 is smaller than the threshold value θ2, the signal SO is, for example, "L". When the output of the cumulative adder 32 is larger than the threshold value θ2, the signal SO is, for example, "H". The threshold value θ2 is a value larger than the threshold value θ1. As described later, in the present device, if the output of the cumulative adder 32 is larger than the threshold value θ1, an output frequency of the line locked PLL 20 is switched to reduce the phase difference φ between the external horizontal synchronizing signal HS and the internal horizontal synchronizing signal Hsync, thereby the output of the cumulative adder 32 can become smaller than the threshold value θ1. However, if the output of the cumulative adder 32 is extremely large, the switching of the output frequency of the line locked PLL 20 cannot make the output of the cumulative adder 32 smaller than the threshold value θ1. The threshold value θ2 represents a limit value of such control. Thus, if the signal S0 is "H", there is no need to switch the output frequency of the line locked PLL 20, and it is possible to determine that the video signal VS is a nonstandard signal.

A control section 40 performs the control of switching the output frequency of the line locked PLL 20 based on a determination result from the determination section 30, that is, the output of the comparator 33. The switching of the output frequency is performed, for example, by controlling a gain of a not shown voltage controlled oscillator (VCO) in the line locked PLL 20 or by changing the number of divisions of a frequency divider which divides a frequency of the internal horizontal synchronizing signal Hsync to generate a signal for phase comparison with the external horizontal synchronizing signal HS. For example, increasing the gain of the VCO makes it possible to increase the frequency of the internal horizontal synchronizing signal Hsync.

Here, a window period may be provided, and if the output of the comparator 33 becomes "L" within the window period, the control section 40 may not perform the control of switching the output frequency of the line locked PLL 20. In other words, when the determination section 30 determines, repeatedly for a predetermined number of times, that the time integral value of the phase difference φ between the external horizontal synchronizing signal HS and the internal horizontal synchronizing signal Hsync is larger than the threshold value θ1, the control section 40 may perform the control of switching the output frequency of the line locked PLL 20. Thus, even if there is a case when the external horizontal synchronizing signal HS cannot be separated correctly from the video signal VS due to influence of noise or the like, such a temporal phenomenon can be ignored.

A filter 50 smoothes the control of switching the output frequency of the line locked PLL 20 by the control section 40 and transfers the smoothed control to the line locked PLL 20. For example, when the control section 40 performs the control of making the gain of the not shown VCO in the line locked PLL 20 four times as much, the filter 50 transfers the control by the control section 40 such that the gain of the VCO is changed stepwise, i.e., is made two, three, and four times as much one field by one field. When the gain of the VCO is abruptly changed, the internal horizontal synchronizing signal Hsync abruptly changes, causing video display distortion, whereas when the control by the control section 40 is smoothed by the filter 50, the switching of the internal horizontal synchronizing signal Hsync becomes smooth, which makes it possible to suppress the video display distortion.

As described above, according to the present embodiment, when an input video signal VS has a low quality, and especially when a frequency of an external horizontal synchronizing signal HS is unstable, an output frequency of a line locked PLL 20 can be switched to lock an internal horizontal synchronizing signal Hsync to a desired frequency. Thus, a low quality video signal VS can be determined to be a standard signal and can be displayed.

### (Embodiment 2)

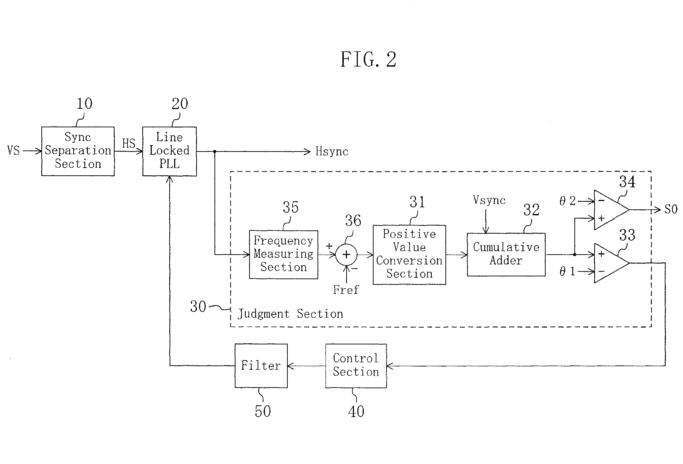

FIG. 2 shows a configuration of a synchronizing-signal generating device according to Embodiment 2. The device according to the present embodiment includes a determination section 30 whose configuration is different from that of Embodiment 1. Hereinafter, only points different from Embodiment 1 are described.

The determination section 30 according to the present embodiment computes a time integral value of a difference between a frequency of an internal horizontal synchronizing signal Hsync and the normal frequency and determines whether or not the time integral value exceeds a threshold value. Specifically, a frequency measuring section 35 measures the frequency of the internal horizontal synchronizing signal Hsync. The measuring of the frequency can be performed, for example, by counting intervals between rising edges of the pulse of the internal horizontal synchronizing signal Hsync by a system clock signal, or the like. A subtracter 36 computes a difference between an output of the frequency measuring section 35 and a reference value Fref. The reference value Fref is a value representing the normal frequency (for example, 15.75 kHz) of a horizontal synchronizing signal. A positive value conversion section 31 outputs an absolute value or a squared value of an output of the subtracter 36.

As described above, according to the present embodiment, when an input video signal has a low quality, and especially when an external horizontal synchronizing signal is shifted from the normal frequency by a certain amount, an output frequency of the line locked PLL 20 can be switched to lock an internal horizontal synchronizing signal Hsync to a desired frequency. Thus, a low quality video signal VS can be determined to be a standard signal and can be displayed.

It is to be noted that in Embodiments 1 and 2, the comparator 34 and the filter 50 can each be omitted. Omitting one or both of these does not impair the advantage mentioned above.

### Industrial Applicability

A synchronizing-signal generating device according to the present invention can generate an internal horizontal synchronizing signal so that an input video signal which may have a somewhat low quality can be determined to be a standard signal, and thus is useful for a device for processing an analog video signal output from a legacy apparatus such as a home video tape recorder.

## Claims

1. A synchronizing-signal generating device for generating an internal horizontal synchronizing signal based on a video signal which is externally input, the synchronizing-signal generating device comprising:
a sync separation section for separating an external horizontal synchronizing signal from the video signal;
a line locked PLL for receiving the external horizontal synchronizing signal as a reference signal and generating the internal horizontal synchronizing signal;
a determination section for computing a time integral value of a phase difference between the external horizontal synchronizing signal and the internal horizontal synchronizing signal and determining whether or not the time integral value exceeds a threshold value; and
a control section for performing the control of switching an output frequency of the line locked PLL based on a determination result from the determination section.

2. The synchronizing-signal generating device of claim 1, wherein the determination section includes:
a positive value conversion section for receiving the phase difference between the external horizontal synchronizing signal and the internal horizontal synchronizing signal from the line locked PLL and converting the phase difference to a positive value;
a cumulative adder for performing cumulative addition of an output of the positive value conversion section for a predetermined period; and
a comparator for comparing an output of the cumulative adder with the threshold value.

3. A synchronizing-signal generating device for generating an internal horizontal synchronizing signal based on a video signal which is externally input, the synchronizing-signal generating device comprising:
a sync separation section for separating an external horizontal synchronizing signal from the video signal;
a line locked PLL for receiving the external horizontal synchronizing signal as a reference signal and generating the internal horizontal synchronizing signal;
a determination section for computing a time integral value of a difference between a frequency of the internal horizontal synchronizing signal and a normal frequency and determining whether or not the time integral value exceeds a threshold value; and
a control section for performing the control of switching an output frequency of the line locked PLL based on a determination result from the determination section.

4. The synchronizing-signal generating device of claim 3, wherein the determination section includes:
a frequency measuring section for measuring the frequency of the internal horizontal synchronizing signal;
a subtracter for computing a difference between an output of the frequency measuring section and a reference value representing the normal frequency;
a positive value conversion section for converting an output of the subtracter to a positive value;
a cumulative adder for performing cumulative addition of an output of the positive value conversion section for a predetermined period; and
a comparator for comparing an output of the cumulative adder with the threshold value.

5. The synchronizing-signal generating device of any one of claims 1 and 3, wherein
when the determination section determines, repeatedly for a predetermined number of times, that the time integral value exceeds the threshold value, the control section performs the control of switching the output frequency of the line locked PLL.

6. The synchronizing-signal generating device of any one of claims 1 and 3, further comprising:
a filter for smoothing the control of switching the output frequency of the line locked PLL by the control section and transferring the smoothed control to the line locked PLL.

7. The synchronizing-signal generating device of any one of claims 2 and 4, wherein
the positive value conversion section performs a coring process on its input or output signal.

8. The synchronizing-signal generating device of any one of claims 2 and 4, wherein
the determination section further includes a second comparator for comparing the output of the cumulative adder with a second threshold value larger than the threshold value, and when the second comparator shows that the output of the cumulative adder is larger than the second threshold value, the determination section determines the video signal to be a nonstandard signal.
